(19) Europäisches Patentamt

European Patent Office

Office européen des brevets

(11) **EP 1 405 521 B1**

(12) **EUROPEAN PATENT SPECIFICATION**

(45) Date of publication and mention
of the grant of the patent:
**26.01.2005 Bulletin 2005/04**

(21) Application number: **02738465.0**

(22) Date of filing: **20.06.2002**

(51) Int Cl.⁷: **H04N 7/26**, H04N 7/50,
H04N 7/36

(86) International application number:
**PCT/IB2002/002362**

(87) International publication number:
**WO 2003/001814 (03.01.2003 Gazette 2003/01)**

(54) **VIDEO CODING METHOD**

VIDEOKODIERUNGSVERFAHREN

PROCEDE DE CODAGE VIDEO

(84) Designated Contracting States:
**AT BE CH CY DE DK ES FI FR GB GR IE IT LI LU MC NL PT SE TR**

(30) Priority: **26.06.2001 EP 01401697**
**16.10.2001 EP 01402666**

(43) Date of publication of application:
**07.04.2004 Bulletin 2004/15**

(73) Proprietor: **Koninklijke Philips Electronics N.V.**
**5621 BA Eindhoven (NL)**

(72) Inventors:
• **CARRASCO, Paul,**
**Internationaal Octrooibureau B.V.**
**NL-5656 AA Eindhoven (NL)**
• **PESQUET-POPESCU, B,**
**Internationaal Octrooibureau**
**NL-5656 AA Eindhoven (NL)**

(74) Representative: **Landousy, Christian et al**
**Philips Intellectual Property & Standards,**
**156 Boulevard Haussmann**
**75008 Paris (FR)**

(56) References cited:
**WO-A-00/13420          US-A- 4 969 040**
**US-A- 5 253 058**

• **XUGUANG YANG ET AL: "Hierarchical backward motion compensation for wavelet video coding using optimized interpolation filters" IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US, 26 October 1997 (1997-10-26), pages 85-88, XP010254114 ISBN: 0-8186-8183-7**
• **BOEROCZKY L ET AL: "MOTIONS ESTIMATION FOR WAVELET TRANSFORM CODING" JOURNAL ON COMMUNICATIONS, PROFINFO, BUDAPEST, HU, vol. 45, May 1994 (1994-05), pages 25-27, XP001028196 ISSN: 0866-5583**

**Description**

FIELD OF THE INVENTION

The present invention generally relates to the field of video compression and, more specifically, to a video coding method based on a subband coding scheme applied to a sequence of two-dimensional frames, said method comprising a subband decomposition step of a current frame (F2), a motion prediction step, carried out with respect to a previous or reference frame (F1), and a coding step.

BACKGROUND OF THE INVENTION

In the multimedia domain, new interactive applications such as Internet video streaming, video database browsing or multi-quality video services, are becoming widespread. This recent expansion of video services over heterogeneous networks (Internet, mobile nets. In Home Digital Networks) has raised new issues in terms of varying transport conditions (bandwidth, error rate...) as well as varying consumer demands and terminal decoding capacibilities (CPU, display size, application...), and has led to investigate new algorithms for video compression, in particular methods based on subband decompositions.

A spatially scalable video coding framework which exploits motion correspondences between successive video frames in the wavelet transform domain in a purely backward fashion, is disclosed in: XUGUANG YANG ET AL: [SPEC041d]Hierarchical backward motion compensation for wavelet video coding using optimized interpolation filters' IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US, 26 October 1997 (1997-10-26), pages 85-88, XP010254114 ISBN: 0-8186-8183-7.

In the conventional video coding algorithms, and more particularly within the frame of the MPEG-4 standard, the motion estimation between successive frames of a processed video sequence is carried out by means of the so-called block-matching algorithm (BMA) : in BMA, a motion vector is assigned to a block of picture elements (pixels) in a current frame (decomposed into blocks of fixed size) by searching a similar block within a defined area - or search window - of a reference frame, the best vector (that represents the shifting of the block) being found by evaluating candidates according to an error measure (the best corresponding block is the one that gives rise to a minimal error). The BMA unfortunately generates high frequency artefacts at the blocks edges (blocking effects) in the motion compensated frames. When the BMA is used in coding schemes based on a wavelet decomposition, these artefacts reduce the coding efficiency by inducing high coefficients in the wavelet decomposition of the compensated frames.

SUMMARY OF THE INVENTION

The object of the invention is to propose a video coding method incorporating another type of motion estimation and compensation and allowing to improve the coding efficiency.

To this end, the invention relates to a method such as defined in the introductory paragraph of the description and which is moreover characterized in that said motion prediction step is based on a redundant decomposition of the reference frame, according to the following procedure :

(1) in the approximation subband of said decomposition, the motion is estimated by means of a full search operation involving said reference frame and applied to each picture element (pixel) of the current frame ;
(2) for the other subbands, the motion is estimated by means of a pixel (or pel) recursive motion estimation algorithm using for the prediction the reference redundant subband reconstructed from the subsampled subbands yielded by said subband decomposition.

The proposed technical solution is based on the implementation of a pel-recursive motion estimation algorithm using wavelets. A motion estimation in the wavelet domain has to cope with the problem of translation invariance. The redundant decomposition of the reference frame is then used to predict the motion, allowing thus to take into account motion on the finest resolution grill. In the approximation subband, the motion is estimated by a full search algorithm applied to every pixel in the current frame. For the other subbands, a pel-recursive algorithm using for prediction the reference redundant subband is implemented. The initialization of this algorithm is made using a weighted value of the motion vectors of the spatial neighbours in the same subband and of the motion vector corresponding to the same position at the previous level of the decomposition. The algorithm allows to do a re-initialization at the positions failing to converge towards a good estimate. The scanning order in the subbands is also optimized in order to minimize the drift that can occur in a line-by-line scan.

More specifically, said pel-recursive motion estimation algorithm may comprise the following sub-steps:

(a) an initialization sub-step, the iterative algorithm being initialized with the mean value $d_0(m)$ of the motion vector in a causal neighbourhood S :

$$d_0(m) = \frac{1}{\text{Card}(S)} \sum_{j \in S} d(m - j)$$

the following notations being used :

m = pixel for which the motion has to be estimated
d(m) = its motion vector ;

(b) an updating sub-step, for updating $d_i$ according to the relation :

$$d_{i+1} = d_i + u_i,$$

where $u_i$, determined at each iteration i, is an update vector given by :

$$u_i = -\frac{E(m)}{\|\nabla A\|^2 + \lambda} . \nabla A$$

where $\nabla A$ is the gradient of the image at the point $m-d_i$, $E(m) = B(m) - A(m-d_i)$ is the prediction error at the current iteration, and $\lambda$ is a regularization parameter ;
(c) a decision sub-step, for carrying a break test and thus ending the procedure if $d_i$ is close enough to d ;

a typical neighbourhood of four pixels being preferably used.
In a particular implementation of the invention, the break test may be based on the estimation of the following ratio :

$$R = \frac{\|u_i\|^2}{\|d_i\|^2}$$

said ratio having to be greater than a given threshold $\varepsilon$.
Said break test may also include an additional condition put on a maximum number of iterations.
It may also be indicated that, according to an advantageous embodiment of the invention, the determination of said update vector $u_i$ is based on a computation step including the following minimizing operation : knowing that $B(m) = A(m-d_i) - \delta d^T . \nabla A$ where $\delta d^T . \nabla A$ is the inner product of $\nabla A$ and vector $\delta d = d - d_i$, to minimize the square error J :

$$J = (B(m) - A(m-d_i) + \delta d^T . \nabla A)^2 + \lambda \|\delta d\|^2$$

with respect to $\delta d$ , the term $\lambda \|\delta d\|^2$ being a regularization term provided in view of a trade-off between the smoothness of the resulting motion vector field, for large values of $\lambda$, and the accuracy of the motion vectors, for small values of $\lambda$ , the minimum being obtained for $\partial J/\partial \delta d = 0$ and leading to the update vector :

$$\delta d = u_i = -\frac{E(m)}{\|\nabla A\|^2 + \lambda} . \nabla A$$

In another embodiment of the invention, the motion estimation algorithm may also comprise the following sub-steps :

(a) an initialization sub-step, the iterative algorithm being initialized with the mean value $d_{j,o}(m)$ of the motion vector in a causal neighbourhood S:

$$d_{j,o}(m) = \frac{1}{\text{Card}(S)} \sum_{j \in S} d_j(m-k)$$

the following notations being used :

$k \in s$ (1 to 4)
m = pixel for which the motion has to be estimated
$d_{j,o}(m)$ = its motion vector ;

(b) an updating sub-step, for updating $d_{j,\,i+1}$ according to the relation :

$$d_{i,\,i+1} = d_{j,i} + u_{j,i},$$

where $u_{j,i}$ determined at each iteration i is an update vector given by :

$$u_{j,i} = ( \sum_{s=0,1}^{3} (\nabla A_{j,s} \nabla A_{j,s}^T) + \lambda I)^{-1} (- \sum_{s=0,1}^{3} E_{j,s}(m) \nabla A_{j,s})$$

where :

$$\nabla A_{j,s} = \begin{pmatrix} \dfrac{\partial A_{j,s}(m-d_{j,i})}{\partial m} \\ \dfrac{\partial A_{j,s}(m-d_{j,i})}{\partial n} \end{pmatrix}$$

is the gradient of the image at point m - $d_{j,i}$
and $E_{j,s}(m) = B_{j,s}(m) - A_{j,s}(m - d_{j,i})$
(c) a decision sub-step, for carrying a break test and thus ending the procedure if $d_{j,i}$ is close enough to $d_j$.

BRIEF DESCRIPTION OF THE DRAWINGS

The present invention will now be described, by way of example, with reference to the accompanying drawings in which:

Fig. 1 illustrates a subband decomposition of a video sequence, with motion compensation ;
Figs. 2 and 3 respectively show a dyadic subband decomposition and a bank filter allowing to obtain said decomposition ;
Figs. 4 and 5 illustrate how the subsampling operation of such a dyadic subband decomposition does not preserve the translation invariance ;
Figs. 6 and 7 illustrate identities between representations, showing that redundant decompositions exist for each level of analysis;
Figs. 8 and 9 depict the so-called lifting scheme, respectively in the case of a signal decomposition and in the case of a signal reconstruction;
Fig. 10 to 12 show three levels of the classical wavelet decomposition obtained by applying the identities of Figs. 6 and 7 to each bank filter of Fig.3;
Fig. 13 illustrates the choice of the samples (0 for even, 1 for odd) for a decomposition on three levels ;
Fig. 14 shows the 64 possible subsampling choices corresponding to the 64 possible decomposition bases;
Fig. 15 shows how interleaving subsampled subbands yields the redundant subband ;
Fig. 16 illustrates the redundant decomposition of a single frame, everyone of the ten redundant subbands having the same size as the original frame ;

Fig. 17 shows the classical, linear scanning order, and Fig.18 a causal scanning order allowing to obtain an improved causality in the initialization of the described pel-recursive algorithm ;
Fig. 19 shows a full search window in the redundant plane for the pixel (m,n).

## DETAILED DESCRIPTION OF THE INVENTION

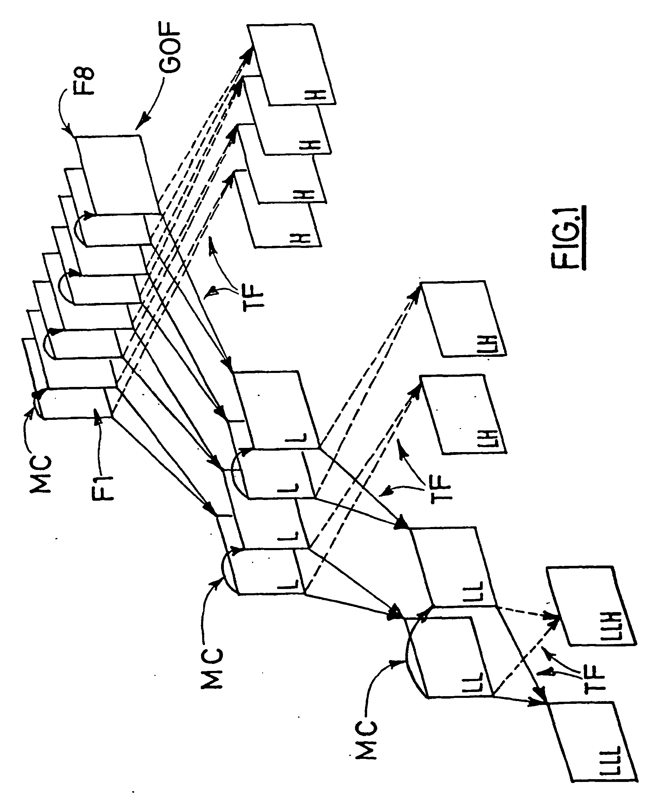

In order to obtain flexible video coding systems, able to cope with different requirements and capabilities, the scalability is the expected functionality. Progressive encoding techniques based on subband decompositions may be an answer, since they allow a fully progressive transmission. Particularly, wavelets have a high efficiency in progressively encoding images in view of a scalable representation. They offer a natural multiscale representation for still images, that can be extended to video data by means of a 3D (or 2D+t) wavelet analysis including the temporal dimension within the decomposition (3D = three-dimensional ; 2D = two-dimensional ; t = time). The introduction of a motion compensation step in the 3D subband decomposition scheme leads to a spatio-temporal multiresolution (hierarchical) representation of the video signal, as illustrated in Fig. 1 showing a temporal subband decomposition of the video information, with motion compensation.

The illustrated 3D wavelet decomposition with motion compensation is applied to a group of frames (GOF), referenced F1 to F8. In this 3D subband decomposition scheme, each GOF of the input video is first motion-compensated (MC) in order to process sequences with large motion, and then temporally filtered (TF) using Haar wavelets. The dotted arrows correspond to a high-pass temporal filtering, while the other ones correspond to a low-pass temporal filtering, and three stages of decomposition are shown (L and H = first stage ; LL and LH = second stage ; LLL and LLH = third stage).

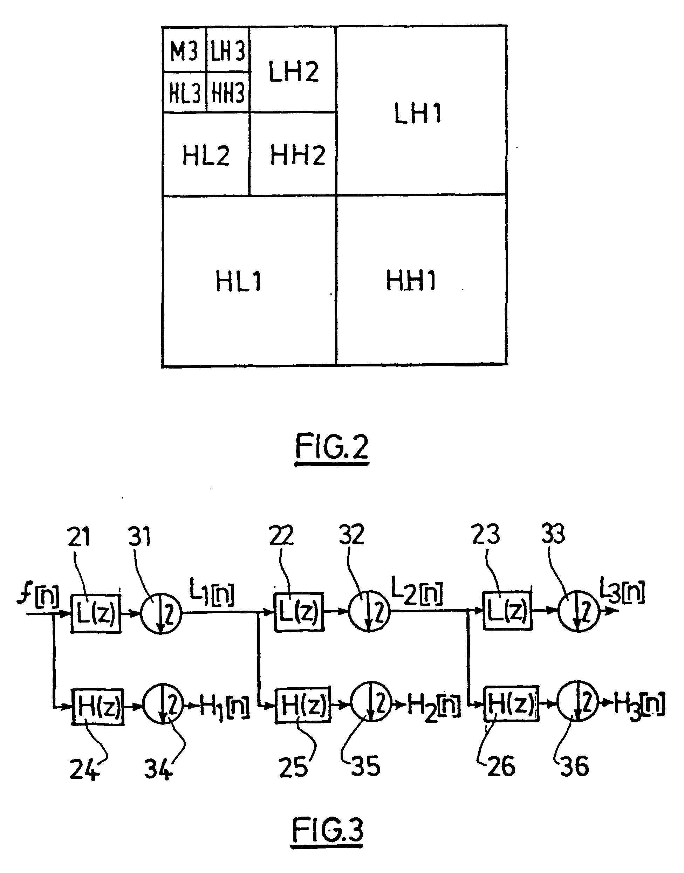

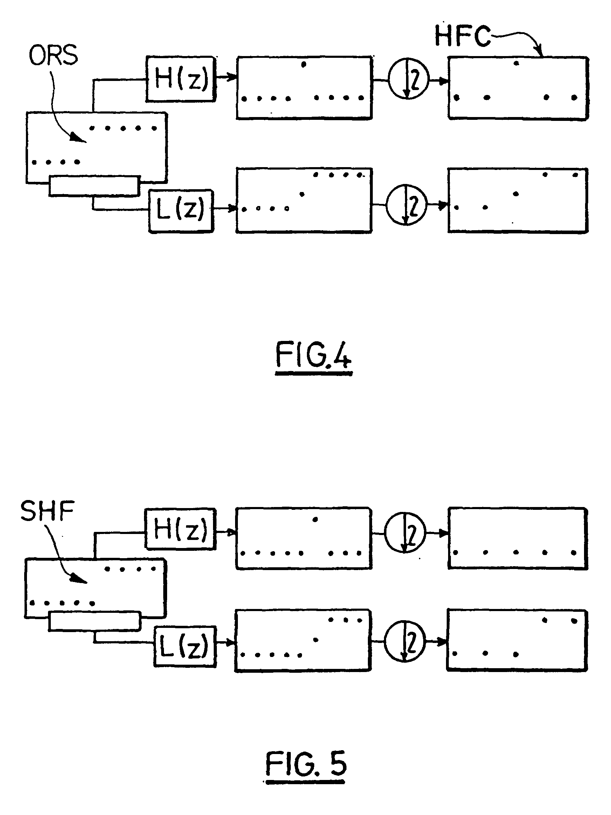

However, when performing a pel-recursive motion estimation on the coefficients of each subband, the lack of translation invariance must be taken into account. The major problem with a dyadic subband decomposition (see Fig.2, showing such a decomposition, performed for three layers and leading to ten subbands LH1, HL1 and HH1 in the lowest layer, LH2, HL2 and HH2 in the middle layer, and M3, LH3, HL3 and HH3 in the highest layer ; and Fig.3, depicting a bank filter that allows to obtain this decomposition from an input signal f[n], giving output signals L1[n], L2[n], L3[n], H1[n], H2[n] and H3[n]) is indeed the fact that the subsampling operation (31, 32, 33, 34, 35, 36) applied after each filtering operation (21, 22, 23, 24, 25, 26) does not preserve the translation invariance (while the redundant wavelet transform of a signal is a time invariant representation, on the contrary the non redundant wavelet decomposition lacks this property). An example is given in Figs 4 and 5, where the samples in the high and low filtering branches, at the outputs of the low-pass and high-pass filters (L(z) and H(z)) and the subsamplers ($\downarrow$ 2), are shown respectively in the case of a first position of the edge of a moving object (original signal ORS) and in the case of a shifted input (shifted input SHF) corresponding to another position of said edge. The obtained signal is shown just after each filter and each subsampler. Each subsampling operation has to keep either the even or the odd samples : a moving edge has resulted in a high frequency coefficient HFC in the first case (Fig.4, high filtering branch), while said edge is no longer detectable in the second one (Fig.5). Consequently, one cannot deduce motion from subsampled subband coefficients. The motion prediction must be performed from unsampled subbands.

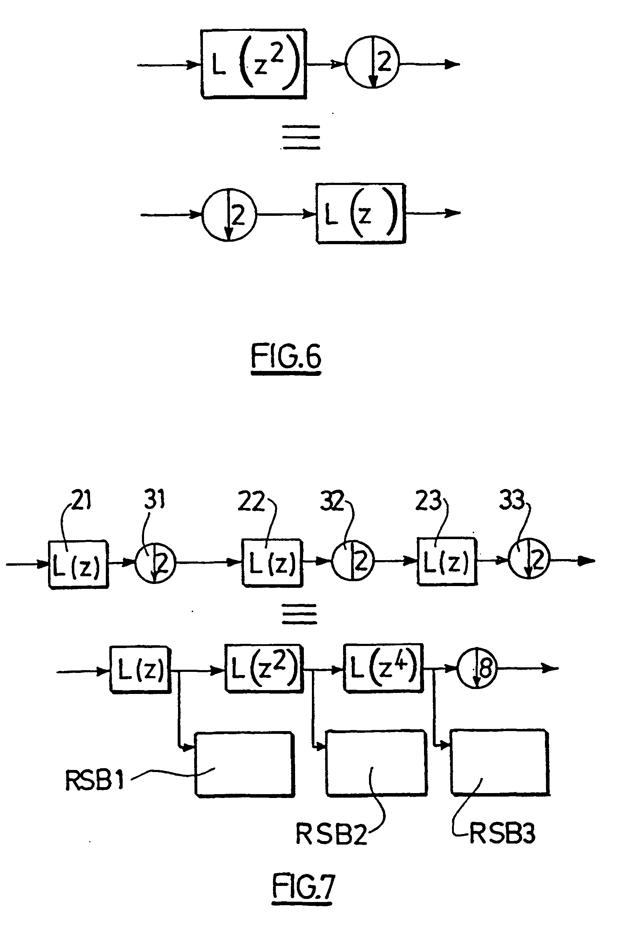

For a 1D signal, a subsampling operation yields two possible choices : either odd or even samples can be taken. For a 2D signal (such as an image), this operation yields four possible decompositions. Therefore, if a signal frame is decomposed upon three levels, 64 possible decompositions, equivalent in terms of quantity of information, can be obtained. However, as previously mentioned, a motion estimation cannot be performed on them, because they are not redundant. It is then observed from Fig.6 (illustrating the identity between the two representations ($L(z^2) + \downarrow$ 2) and ($\downarrow$ 2 + L(z) shown in that figure) that redundant decompositions exist for each level of analysis. The introduction of the equivalence of Fig.6 in the low filtering branch (21, 31, 22, 32, 23, 33) of Fig.3 (repeated in the upper part of Fig. 7) leads to the equivalent scheme of the lower part of said Fig.7 : now, before the final subsampling operation, a redundant subband whose size is the same as that of the original image is obtained, and a valid motion estimation can be performed on it (the redundant subbands RSB1, RSB2, RSB3 at the three levels 1, 2, 3 have been shown in Fig.7).

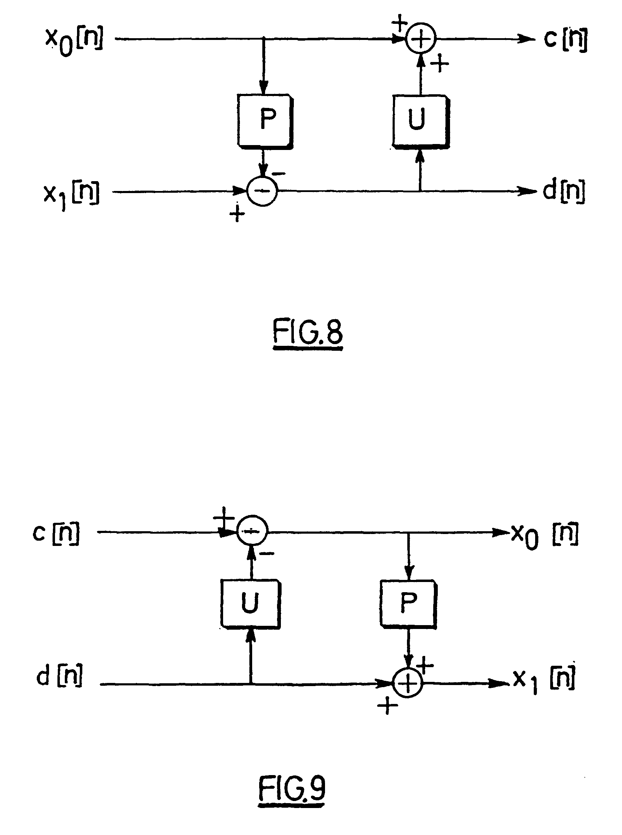

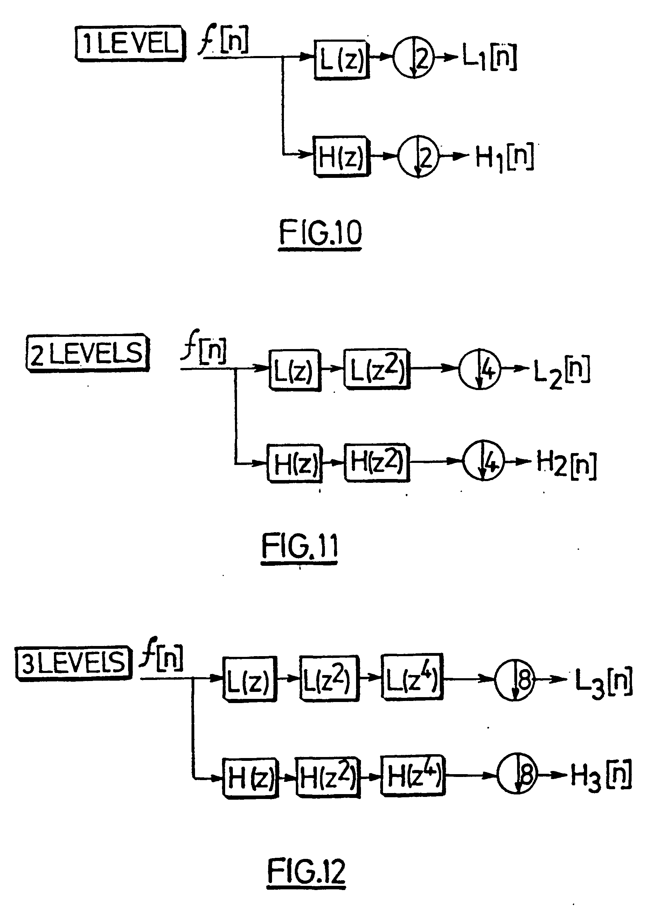

The wavelet decomposition itself is performed using the so-called lifting scheme, depicted for instance in Fig. 8, in the case of the signal decomposition leading to outputs c[n] and d[n], and Fig.9, in the case of the signal reconstruction from said signals c[n] and d[n] (this implementation has been chosen because of the flexibility for the choice of the prediction filters P and update filters U, but it is obviously not the only one possible). For each filter pass, either odd or even samples ($x_1[n]$, $x_0[n]$ respectively) can be taken first, as it can be seen in Figs.8 and 9 :

- even samples first ? :

$$x_0[n] = f[2n] \atop x_1[n] = f[2n+1]\Bigg\} \; n \geq 0$$

- odd samples first ? :

$$x_0[n] = f[2n+1] \atop x_1[n] = f[2(n+1)]\Bigg\} \; n \geq 0$$

Figs.10 to 12 then show the "classical" wavelet decomposition obtained by applying the identities of Figs.6 and 7 to each filter bank of Fig.3 : one can see that stopping just before the decimation at each level (Fig.10, 11 or 12) yields the redundant subband.

The problem is that lifting wavelets inherently use decimation before filtering. In Fig.8, where the input signals for the lifting bank arc $x_0[n] = f[2n].x_1[n] = f[2n+1]$ or $x_0[n] = f[2n+1].x_1[n] = f[2(n+1)]$, these inputs are decimated with respect to the original signal f[n]. Thus the decimation step cannot be skipped during the decomposition, and the redundant subbands can be obtained in another way, now described.

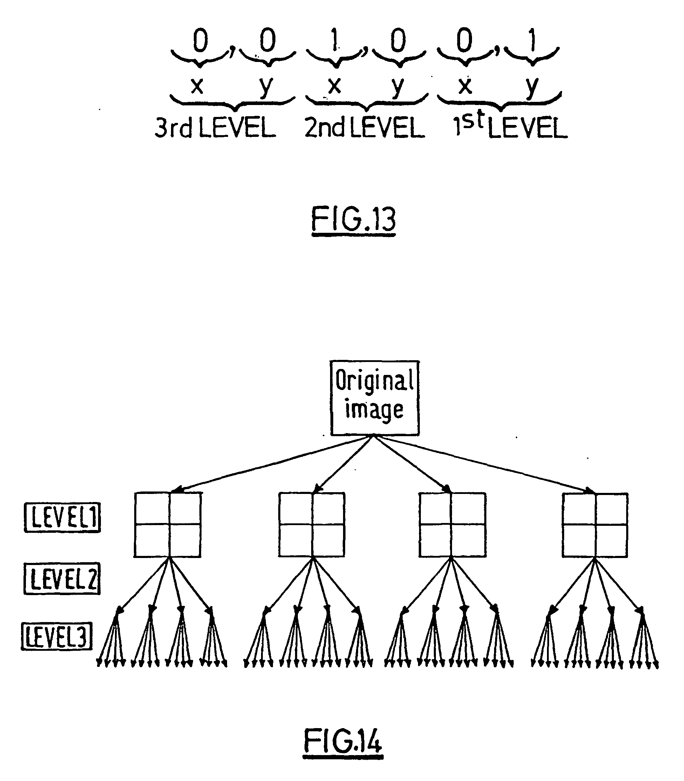

It has been seen, in relation with Figs 8 and 9, that for each level of decomposition and for each dimension, it is possible to choose even or odd samples first. If for instance the even choice is represented by 0 and the odd one by 1, a full decomposition on three levels is then characterized by six bits, as shown in the example of Fig.13 which can be seen as the binary decomposition of the number of the decomposition basis : $0,0,1,0,0,1 \rightarrow$ basis number 9. As a result, there are 64 possible subsampling choices corresponding to the 64 possible decomposition bases (as illustrated in Fig.14).

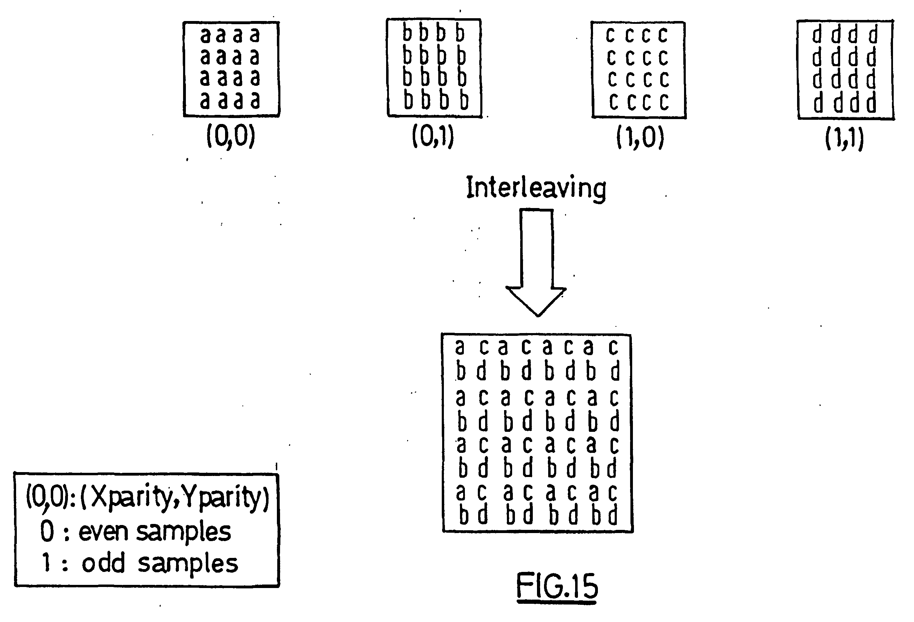

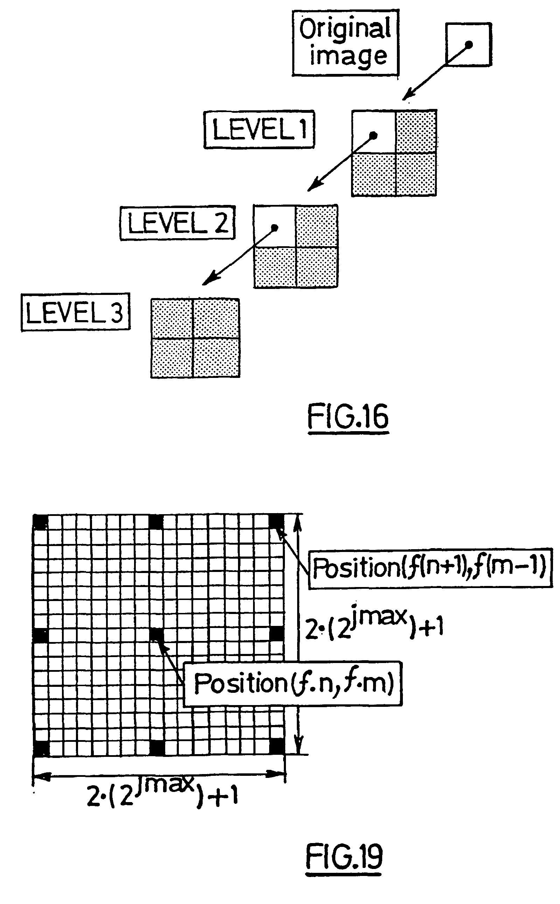

The critically subsampled subbands are then used to construct the redundant subband. The number of the decomposition basis yields the position where the subband will be placed on a rectangular grid. For example, if the bits describing x are 0 1 0 (3rd level, 2nd level, 1st level), they yield the number 2, which is the reconstruction offset showing where the first sample of the subband has to be placed in the redundant subband, following the x direction. The same operation is applied in the y direction, and the samples are then placed at intervals of length : interval = $2^{\text{decomposition level}}$. Knowing the offset and the interval for each subsampled subband, it is possible to interleave them in order to reconstruct the redundant subband, as shown in Fig.15. This redundant subband has the same size as the original image. At the first level of decomposition, each of the redundant subbands HL, LH and HH is obtained by interleaving four subsampled subbands. At level 2, they are obtained by interleaving 16 subsampled subbands, and at level 3, one has to interleave 64 subsampled subbands to obtain the redundant one (see Fig.14). Eventually, the redundant decomposition yields ten redundant subbands, as illustrated in Fig.16.

The pel-recursive motion estimation will be now described. In what follows, bold characters for vectors (d), $\nabla$ for the gradient, and $(.)^T$ for transposition will be used. The following algorithm is meant to compute the Optic Flow between two matrices $A$ and $B$ , which can be two successive frames of a sequence, or (as considered in the present case) two successive subbands. The aim is to estimate for each pixel m = $(m,n)$, the motion vector d(m) :

$$B(m) = A(m-d) \tag{1}$$

To perform a recursive description of d, it has to be assumed that d is smoothly distributed over the image plane. Basically the method described here is : for each reference pixel in $B$, the gradient in $A$ is computed at the estimated position (m-d) in order to find a pixel in $A$ that is closer to the reference pixel. This yields a new position m-d. If it is the same position, the algorithm stops, else it iterates once more. Thus the algorithm converges and stops when it has reached the right position.

The iterative procedure is composed of the following steps, including the initialization, the computation of an update vector, the update of the motion vector, and a break test :

(1) The iterative procedure is initialized by the mean value of the motion vector in a causal neighbourhood S,

$$d_0(m) = \frac{1}{\text{Card}(S)} \sum_{j \in S} d(m - j) \tag{2}$$

considering that a typical neighbourhood of four pixels can be used (the motion vectors are supposed to be zero out of the image boundaries):

```
* j₁ j₂ j₃ *
* j₀ m * *
* * * * *
```

(2) The second step is the determination, at each iteration i, of an update vector $u_i$ :

$$u_i = -\frac{E(m)}{\|\nabla A\|^2 + \lambda} \nabla A \qquad (3)$$

where :

$$\nabla A = \begin{pmatrix} \dfrac{\partial A(\mathbf{m \cdot d}_i)}{\partial \mathbf{m}} \\ \dfrac{\partial A(\mathbf{m \cdot d}_i)}{\partial \mathbf{n}} \end{pmatrix} \qquad (4)$$

is the gradient of the image at point m-d$_i$,

$$E(m) = B(m) - A(m\text{-}d_i) \qquad (5)$$

is the prediction error at the current iteration, and $\lambda$ is a regularization parameter.
(3) In the third step, $d_i$ is updated :

$$d_{i+1} = d_i + u_i \qquad (6)$$

(4) The break test ends the procedure if $d_i$ is close enough to d. This test can be for instance based on the estimation of the ratio :

$$R = \frac{\|u_i\|^2}{\|d_i\|^2} \qquad (7)$$

which has to be superior to $\varepsilon$ ($\varepsilon$ can be turned to balance the vector determination precision and the computational load). A supplementary condition may be put on the maximum number of iterations.
The second step (update vector computation, described by the relation (3)) can be detailed. The first order approximation of the relation (1) reads :

$$B(m) = A(m\text{-}d_i) - \delta d^T . \nabla A \qquad (8)$$

where $\nabla A$ is the gradient from the relation (4) and $\delta d = d - d_i$
One has to minimize the square error (the term $\lambda \|\delta \mathbf{d}\|^2$ will be explained later) :

$$\min_{\delta \mathbf{d}} \left( \underbrace{(\beta(\mathbf{m}) - A(\mathbf{m \cdot d}_i) + \delta \mathbf{d}^T . \nabla A)^2 + \lambda \|\delta \mathbf{d}\|^2}_{J} \right) \qquad (9)$$

The minimum is obtained when : $\frac{\partial J}{\partial \delta d} = 0$ , i.e. when :

$$(B(m) - A(m-d_i) + \delta d^T.\nabla A).\nabla A + \lambda \delta d = 0 \tag{10}$$

As $\delta d^T.\nabla A$ is the inner product of vectors $\delta d$ and $\nabla A$, one has : $\delta d^T.\nabla A = \nabla A^T. \delta d$ and the relation (10) becomes :

$$(\nabla A.\nabla^T + \lambda I).\delta d = -E(m).\nabla A \tag{11}$$

The utility of $\lambda$ can now be seen : the matrix $\nabla A\nabla A^T$ is not invertible (rank 1), but $\nabla A\nabla A^T + \lambda I$ can be inverted using the following lemma:

$$(M + uu^T)^{-1} = M^{-1} - \frac{M^{-1}uu^TM^{-1}}{1+u^TM^{-1}u}$$

which yields here for $u = \nabla A$ and $M = \lambda I$ :

$$((\nabla A\nabla A^T + \lambda I)^{-1} = \frac{\nabla A}{\lambda+\|\nabla A\|^2} \tag{12}$$

and finally leads to :

$$\delta d = -\frac{E(m)}{\lambda+\|\nabla A\|^2} \nabla A \tag{13}$$

This is the update vector $u_i$ used in the relations (3) and (6). This regularization provides a trade-off between the smoothness of the resulting motion vector field (for large $\lambda$) and the accuracy of the motion vectors (for small $\lambda$).

It has been seen, in the relation (11), that $\nabla A$ has to be computed. The gradient computation can be approximated by a discrete filtering of the image. To perform a discrete approximation of the gradient by linear filtering, the filters must satisfy some conditions that will be now reminded. Assuming that h is a FIR filter, and considering the rectangular sampling of a continuous field F(x,y), one has : F[n,m]=F(nL_1,nL_2). The gradient of the image following the x direction is :

$$L_1.\frac{\partial F}{\partial x}(nL_1,nL_2) = h_{n,m} * F[n,m]$$
$$= \sum_{(k,l)\in S} h_{k,l}.F[n-k,m-l] \tag{14}$$

S being considered as a close neighbourhood of 9 pixels (the center pixel m and the eight pixels around). On the other hand, at first order, one has :

$$F[n-k, m-l] \approx F[n, m] - kL_1.\frac{\partial F}{\partial x}(nL_1,nL_2) - lL_2.\frac{\partial F}{\partial y}(nL_1,nL_2) \tag{15}$$

and combining the relations (14) and (15) yields :

$$L_1 \cdot \frac{\partial F}{\partial x}(nL_1, nL_2) = \sum_{(k,l)\in S} h_{k,l} \cdot F[n,m]$$

$$- L_1 \sum_{(k,l)\in S} kh_{k,l} L_1 \cdot \frac{\partial F}{\partial x}(nL_1, nL_2)$$

$$- L_2 \sum_{(k,l)\in S} lh_{k,l} L_1 \cdot \frac{\partial F}{\partial y}(nL_1, nL_2) \qquad (16)$$

Identifying the members of the relation (16) then yields three constraints for h :

$$\sum_{(k,l)\in S} h_{k,l} = 0$$

$$\sum_{(k,l)\in S} kh_{k,l} = -1$$

$$\sum_{(k,l)\in S} lh_{k,l} = 0$$

The chosen filters, which satisfy these conditions, are the following :

(a) x-dimension gradient filter :

| -1/8 | 0 | 1/8 |
|------|---|-----|
| -1/4 | 0 | 1/4 |
| - 1/8 | 0 | 1/8 |

(b) y-dimension gradient filter :

| -1/8 | -1/4 | -1/8 |
|------|------|------|
| 0 | 0 | 0 |
| 1/8 | 1/4 | 1/8 |

which yields a good approximation of the discrete gradient.

Different improvements can be proposed for the implementation of the algorithm described above, especially in terms of accuracy of motion vector and speed. The speed of the algorithm can be increased by making it more rapidly convergent. The initialization step is thus crucial for the convergence speed. A good initialization has to take into account as much as possible the previously computed motion vectors. However, the assumption about the smoothness of the distribution of the motion vectors over the image plane can be untrue (for certain types of motions, for instance when objects in the plane are moving in different directions) at the boundaries of the objects. The algorithm has to be able to detect this event, and to correct the initialization by breaking the smoothness of the motion vector field. It is possible to introduce a break test at the end of the initialization step (and even after each update of the motion vector). One has to compute two test values:

$$E_0(m) = |B_{j,s}(m) - A_{j,s}(fm)|$$

$$E_{j,s}(m) = |B_{j,s}(m) - A_{j,s}(fm - fd_i)|,$$

where $E_0$ is the error without motion ($d_i = 0$), and $E_{j,s}$ is the error when the computed motion vector is taken into account. The principle is that if $E_{j,s}$ is greater than $E_0$, the motion vector has to be reinitialized to zero. However, too frequent reinitializations will prevent the algorithm from converging. When the prediction error is very small, this case could appear quite often. That is why a tolerance in this test is introduced, which is defined through inequality :

$$E_{j,s} > E_0 + THR \qquad (17)$$

where THR is a threshold, to be determined according to the value of the subband coefficients.

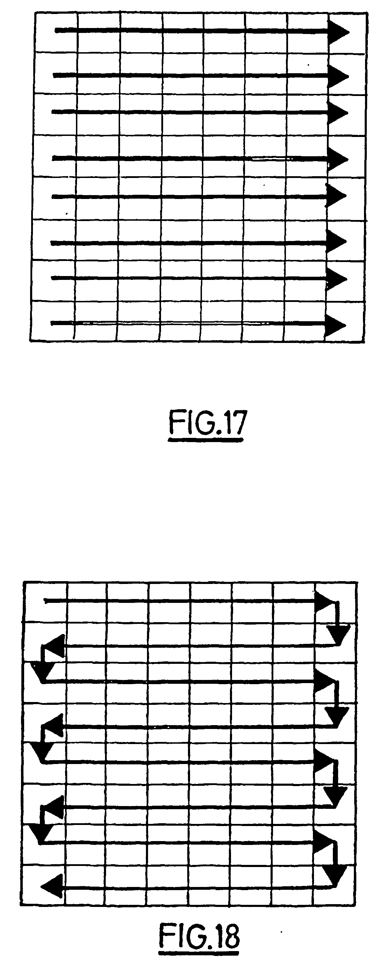

Another improvement relates to the scanning order. The image being a table, it is scanned from the first item (i.e. m = (0,0)) to the last one (m=xmax, ymax), as shown in Fig.17. This initialization order, combined with the initialization neighbourhood, yields a bad motion estimation in the lower left comer of the image (since, for the first column of the image, the initialization neighbourhood is only reduced to the pixel above). The method is then not robust and leads to an error drift. The scanning order presented in Fig.18 yields better results. The image is scanned, the even lines from the left to the right, and the odd lines from the right to the left. This allows an improved causality in the initialization. Indeed, every pixel depends on all the previously scanned pixels. The error drift observed in the lower left corner of the image docs not exist with this method. A better initialization makes possible for the algorithm to converge faster. The error drift was due to the fact that the number of iterations is limited: if the initialization is not good, the algorithm has not enough iterations to converge to the right motion vector. Given this new scanning order, the initialization neighbourhood has to be changed. For the first line, the neighbourhood is reduced to the previous pixel :

$* j_0 \; m \; *$

For the even lines, the neighbourhood remains unchanged:

$* j_1 \; j_2 \; j_3 \; *$
$* j_0 \; m \; * \; *$
$* \; * \; * \; * \; *$

A third improvement relates to the approximation subband SB $A_{jmax,0}$ of the image, which has, by definition, very few details. Thus a pel-recursive motion estimation is sometimes not accurate enough. Small errors in the compensated approximation yield bad results for the image reconstructed from the compensated subbands. Better results are obtained if a full search is performed for each pixel of $B_{jmax,0}$ in a window of $A_{jmax,0}$, but this method is not as fast as the pel-recursive algorithm. The size of the search window is :

$$(2.(2^{jmax})+1) \text{ by } (2.(2^{jmax}) + 1)$$

as shown in Fig.19. SB(3,0) being well estimated, it is possible to use its motion vector to initialize the other subband SB. If one calls $d_{approximation}$ the motion vector in SB(3,0) at pixel m($m,n$), and $d_0$ the initialization vector taking into account only spatial neighbours, a new initialization vector can be computed through :

$$D_0 = \alpha \cdot d_{approximation} + (1 - \alpha) \cdot d_0, \qquad (18)$$

where $\alpha$ is a constant that allows to control the influence of $d_{approximation}$ in the initialization. If $\alpha = 0$, $d_{approximation}$ has no influence at all. The same principle can be used for the other subbands SB. It is then possible to use the previously computed motion vector, at a higher level of decomposition j, in order to initialize the algorithm. If one calls $d_{j+1}$ the motion vector estimated at level j+1, the new initialization vector is : $D_0 = \alpha \cdot d_{j+1} + (1 - \alpha) \cdot d_0$.

The generic algorithm described above can be applied between two subbands. However, if it is used, the correlation that exists between the subbands of a same level of decomposition is not taken into account : the computed motion vector should be the same for each pixel in the three subbands (or four when LL-subband is taken into account). It is then possible to decide to estimate, for a given level of decomposition $j \in \{1,2,... jmax\}$, for each pixel m = (m,n), the motion vector $d_j$ (m) :

$$B_{j,s}(m)=A_{js} (m - d_j) \text{ for } s \in \{0,... 4\} \qquad (19)$$

where :

- $A_{0,0}$ represents the first image,
- $B_{0,0}$ represents the second image,
- $A_{j,s}$ represents the subband number s at the j-th decomposition level of the frame A :

  the subband 0 represents the approximation subband (SB),
  the subband 1 represents the horizontal detail SB,
  the subband 2 represents the vertical detail SB,
  the subband 3 represents the diagonal detail SB.

The assumption of d being smoothly distributed over the subband planes has to be made just as previously.

As previously, the iterative procedure, carried out for each level of decomposition $j \in \{1,2,...\, jmax\}$, comprises four steps including the initialization, the computation of an update vector, the update of the motion vector and a break test, but with some slight modifications :

The iterative procedure is initialized by the mean value of the motion vector in a causal neighbourhood S,

$$d_{j,o}(m) \simeq \frac{1}{Card(S)} \sum_{k \in S} d_j(m - k) \qquad (20)$$

with for example a typical neighbourhood of 4 pixels (the motion vectors are supposed to be zero out of the image boundaries):

```
* k₁ k₂ k₃ *
* k₀ m * *
* * * * *
```

2. Then an update vector $u_{j,i}$ is determined :

$$u_{j,i} = \left( \sum_{s=0,1}^{3} (\nabla A_{j,s} \nabla A_{j,s}^{T}) + \lambda I \right)^{-1} \left( - \sum_{s=0,1}^{3} E_{j,s}(m) \nabla A_{j,s} \right) \qquad (21)$$

where :

$$\nabla A_{j,s} = \begin{pmatrix} \dfrac{\partial A_{j,s}(m-d_{j,i})}{\partial m} \\ \dfrac{\partial A_{j,s}(m-d_{j,i})}{\partial n} \end{pmatrix} \qquad (22)$$

is the gradient of the image at point $m - d_{j,i}$ and :

$$E_{j,s}(m) = B_{j,s}(m) - A_{j,s}(m - d_{j,i}) \qquad (23)$$

s varying from 1 to 3 or from 0 to 3, depending on the number of subbands that have to be taken into account (4 for the deeper decomposition level, 3 for the others).

3. Then the motion vector $d_{j,\, i+1}$ is updated :

$$d_{j,i+1} = d_{j,i} + u_{j,i} \qquad (24)$$

4. The break test ends the procedure if $d_{i,j}$ is close enough to $d_j$, this test being for example the estimation of the ratio :

$$R_{j,i} = \frac{\|u_{j,i}\|^2}{\|d_{j,i}\|^2} \qquad (25)$$

which has to be superior than $\varepsilon$ ($\varepsilon$ to be determined). An additional condition is put on the maximum number of iterations.

For the update vector computation, at the first order, the relation (1) becomes, for every s :

$$B_{j,s}(m) = A_{j,s}(m-d_{j,s}) - \delta d_j^T \nabla A_{j,s} \qquad (26)$$

where $\nabla A_{j,s}$ is the gradient from Eq. (4) and $\delta d_j = d_j - d_{j,j}$.

As it is wanted to minimize the square error on all the subbands at the same time:

$$\min_{\delta d_j}\left( \underbrace{\sum_{s=0,1}^{3}(B_{j,s}(m) - A_{j,s}(m - d_{j,i}) + \delta_j^T \nabla A_{j,s})^2 + \lambda\|\delta d_j\|^2}_{Ji} \right) \quad (27)$$

the minimum is obtained when :

$$\frac{\partial J_i}{\partial \delta d_j} = 0$$

i.e. :

$$\sum_{s=0,1}^{3}((B_{j,s}(m) - A_{j,s}(m - d_{j,i}) + \delta d_j^T \nabla A_{j,s})\nabla A_{j,s} + \lambda \partial d_j) = 0 \quad (28)$$

The relation (28) then becomes :

$$( \sum_{s=0,1}^{3}(\nabla A_{j,s}\nabla A_{j,s}^T) + \lambda I).\delta d_j = -E_{j,s}(m).\nabla A_{j,s} \qquad (29)$$

Even without regularization, the matrix

$$\sum_{s=0,1}^{3}\nabla A_{j,s}\nabla A_{j,s}^T + \lambda I)$$

can be invertible. It is a 2 by 2 matrix, and the inverted matrix can be computed explicitely. In this case, the regularization term $\lambda I$ is required only for the control of the motion vector field coherency.

In case this pel-recursive motion estimation algorithm should be applied to the redundant subband, the previous algorithm must be adapted. Let f be the scale factor caracterizing the ratio between the size of the redundant subband and the size of the subsampled subband :

$$f = 2'$$

where j is the decomposition level.

It is known that a redundant subband presents the lack translation invaxiance. As a result, the pel-recursive motion estimation can be performed between a redundant subband (reference frame) and a subsampled subband (current frame). The motion vectors are then (assuming that even samples have been retained for the subsampled decomposition of $B_{j,s}$) defined through :

$$B_{j,s}(m) = A_{j,s}(fm - fd_j) \qquad (30)$$

The iterative procedure is then slightly different :

1. $d_O(m)$ is initialized through the relation (20).
2. The update vector $u_i$ remains unchanged, with the new error :

$$E_{j,s}(m) = B_{j,s}(m) - A_{j,s}(fm - f d_i) \qquad (31)$$

and the new gradient:

$$\nabla A_{j,s} = \frac{1}{f} \begin{pmatrix} \dfrac{\partial A_{j,s}(\mathbf{fm\text{-}fd}_{j,i})}{\partial \mathbf{m}} \\ \dfrac{\partial A_{j,s}(\mathbf{fm\text{-}fd}_{j,i})}{\partial \mathbf{n}} \end{pmatrix} \qquad (32)$$

3. The update equation is unchanged.
4. The break test remains unchanged.

## Claims

**1.** A video coding method based on a subband coding scheme applied to a sequence of two-dimensional frames, said method comprising a subband decomposition step of a current frame (F2), a motion prediction step, carried out with respect to a previous or reference frame (F1), and a coding step, said method being moreover **characterized in that** said motion prediction step is based on a redundant decomposition of the reference frame, according to the following procedure :

(1) in the approximation subband of said decomposition, the motion is estimated by means of a full search operation involving said reference frame and applied to each picture element (pixel) of the current frame ;
(2) for the other subbands, the motion is estimated by means of a pixel (or pel) recursive motion estimation algorithm using for the prediction the reference redundant subband reconstructed from the subsampled subbands yielded by said subband decomposition.

**2.** A coding method according to claim 1, in which said pel-recursive motion estimation algorithm, intended to compute the optic flow between two matrices A and B representing two successive subbands i.e. to estimate for each pixel m its motion vector d(m) in such a manner that B(m) = A(m-d), itself comprises the following sub-steps :

(a) an initialization sub-step, the iterative algorithm being initialized with the mean value $d_0(m)$ of the motion vector in a causal neighbourhood S :

$$d_0(m) = \frac{1}{\text{Card}(S)} \sum_{j \in S} d(m - j)$$

the following notations being used :

m = pixel for which the motion has to be estimated ;
d(m) = its motion vector ;

(b) an updating sub-step, for updating $d_i$ according to the relation :

$$d_{i+1} = d_i + u_i,$$

where $u_i$, determined at each iteration i, is an update vector given by :

$$u_i = -\frac{E(m)}{\|\nabla A\|^2 + \lambda} . \nabla A$$

where $\nabla A$ is the gradient of the image at the point m-$d_i$, $E(m) = B(m) - A(m-d_i)$ is the prediction error at the current iteration, and $\lambda$ is a regularization parameter ;
(c) a decision sub-step, for carrying a break test and thus ending the procedure if $d_i$ is close enough to d.

3. A coding method according to claim 2, in which a typical neighbourhood of four pixels is used.

4. A coding method according to anyone of claims 2 and 3, in which said break test is based on the estimation of the following ratio :

$$R = \frac{\|u_i\|^2}{\|d_i\|^2}$$

said ratio having to be greater than a given threshold $\varepsilon$.

5. A coding method according to claim 4, in which said threshold $\varepsilon$ is turned to balance the vector determination precision and the computational load.

6. A coding method according to anyone of claims 4 and 5, in which said break test includes an additional condition put on a maximum number of iterations.

7. A coding method according to anyone of claims 4 to 6, in which the determination of said update vector $u_i$ is based on a computation step including the following minimizing operation : knowing that $B(m) = A(m-d_i) - \delta d^T . \nabla A$ where $\delta d^T . \nabla A$ is the inner product of $\nabla A$ and vector $\delta d = d - d_i$, to minimize the square error J :

$$J = ((B(m) - A(m-d_i) + \delta d^T . \nabla A)^2 + \lambda \|\delta d\|^2$$

with respect to $\delta d$ , the term $\lambda\|\delta d\|^2$ being a regularization term provided in view of a trade-off between the smoothness of the resulting motion vector field, for large values of $\lambda$ , and the accuracy of the motion vectors, for small values of $\lambda$ , the minimum being obtained for $\partial J/\partial \delta d = 0$ and leading to the update vector :

$$\delta d = u_i = -\frac{E(m)}{\|\nabla A\|^2 + \lambda} . \nabla A$$

8. A coding method according to claim 7, in which the scanning order is carried out in the following way : even lines from the left to the right, odd lines from the right to the left, the initialization neighbourhood being then also modified for the first line, where it is reduced to the previous pixel, and for the odd lines, where it is inverted to preserve causality

9. A coding method according to claim 7, in which said motion estimation algorithm is re-initialized by testing a break condition with some tolerance, the prediction error when using the estimated motion vector being, for said test, compared to the prediction error with no motion estimation, plus a threshold.

10. A coding method according to claim 2, in which the initialization of the motion vector is done with a linear combination of the average over the neighbourhood S and the motion vector obtained from the subband with the same orientation, at the previous decomposition level.

11. A coding method according to claim 1, in which said pel-recursive motion estimation algorithm, intended to use the correlation that exists between the subbands of a same level of decomposition i.e. to estimate for a given level of decomposition $j \in \{1,2,....., jmax\}$ and for each pixel m its motion vector $d_j(m)$ in such a manner that $B_{j,s}(m) = A_{j,s}(m-d_j)$ for $s = \{0...., 4\}$, the two matrices A and B representing two successive subbands. itself comprises the following sub-steps :

(a) an initialization sub-step, the iterative algorithm being initialized with the mean value $d_j(m)$ of the motion vector in a causal neighbourhood S :

$$d_{j,o}(m) = \frac{1}{Card(S)} \sum_{k \in S} d_j(m-k)$$

the following notations being used :

$k \in s$ (1 to 4);
m = pixel for which the motion has to be estimated ;
$d_{j,o}(m)$ = its motion vector ;

(b) an updating sub-step, for updating $d_{j, i+1}$ according to the relation :

$$d_{j, i+1} = d_{j,i} + u_{j,i},$$

where $u_{j,i}$ determined at each iteration i is an update vector given by:

$$u_{j,i} = ( \sum_{s=0,1}^{3} (\nabla A_{j,s} \nabla A_{j,s}^T) + \lambda I)^{-1} (- \sum_{s=0,1}^{3} E_{j,s}(m) \nabla A_{j,s})$$

where :

$$\nabla A_{j,s} = \begin{pmatrix} \dfrac{\partial A_{j,s}(m-d_{j,i})}{\partial m} \\ \dfrac{\partial A_{j,s}(m-d_{j,i})}{\partial n} \end{pmatrix}$$

is the gradient of the image at point m - $d_{j,i}$ and :

$$E_{j,s}(m) = B_{j,s}(m) - A_{j,s}(m - d_{j,i})$$

(c) a decision sub-step, for carrying a break test and thus ending the procedure if $d_{j,i}$ is close enough to $d_j$.

**12.** A coding method according to claim 11, in which a typical neighbourhood of four pixels is used.

**13.** A coding method according to anyone of claims 11 and 12, in which said break test is based on the estimation of the following ratio :

$$R_{i,j} = \frac{\|u_{j,i}\|^2}{\|d_{j,i}\|^2}$$

said ratio having to be greater than a given threshold $\varepsilon$.

**14.** A coding method according to claim 13, in which said break test includes an additional condition put on a maximum number of iterations.

**15.** A coding method according to anyone of claims 13 and 14, in which the determination of said update vector $u_i$ is based on a computation step including the following minimizing operation : knowing that $B_{j,s} = A_{j,s}(m-d_{j,i}) - \delta d_j^T \cdot \nabla A_{j,s}$ where $\delta d^T \cdot \nabla A$ is the inner product of $\nabla A_{j,s}$ and the vector $\delta d_j = d_j - d_{j,i}$, to minimize the square error:

$$min_{\delta_{dj}} \left( \underbrace{\sum_{s=0,1}^{3} (B_{j,s}(m) - A_{j,s}(m - d_{j,i}) + \delta_j^T \nabla A_{j,s})^2 + \lambda \|\delta d_j\|^2}_{Ji} \right) \quad (27)$$

with respect to $\delta d_j$, the term $\lambda \|\delta d_j\|^2$ being a regularization term provided in view of a trade-off between the smoothness of the resulting motion vector field, for large values of $\lambda$, and the accuracy of the motion vectors, for small values of $\lambda$, and the minimum being obtained for $\partial J_j / \partial \delta d_j = 0$.

**Patentansprüche**

**1.** Videocodierungsverfahren auf Basis eines Teilbandcodierungsschemas, angewandt auf eine Sequenz zweidimensionaler Frames, wobei das genannte Verfahren die nachfolgenden Verfahrensschritte umfasst: einen Teilbanddekompositionsschritt eines aktuellen Frames (F2), einen Bewegungsprädiktionsschritt, durchgeführt in Bezug auf ein vorhergehendes oder Bezugsframe (F1) und einen Codierungsschritt, wobei das genannte Verfahren weiterhin **dadurch gekennzeichnet ist, dass** der genannte Bewegungsprädiktionsschritt auf eine redundante Dekomposition des Bezugsframes basiert, und zwar entsprechend der nachfolgenden Prozedur:

(1) in dem Annäherungsteilband der genannten Dekomposition wird die Bewegung mit Hilfe eines kompletten Suchvorgangs geschätzt, wobei das genannte Bezugsframe betroffen ist, und jedem Bildelement (Pixel) des aktuellen Frames zugeführt;
(2) für die anderen Teilbänder wird die Bewegung mit Hilfe eines Pixel-(oder Pel-) Rekursivbewegungsschätzungsalgorithmus geschätzt, wobei zur Prädiktion das redundante Bezugsteilband verwendet wird, rekonstruiert aus den unterabgetasteten Teilbändern, erhalten durch die genannte Teilbanddekomposition.

**2.** Codierungsverfahren nach Anspruch 1, wobei der genannte Pel- Rekursivbewegungsschätzungsalgorithmus, zum Berechnen des optischen Flusses zwischen zwei Matrizes A und B, die zwei aufeinander folgende Teilbänder darstellen, d.h. um für jedes Pixel m den Bewegungsvektor d(m) zu schätzen, und zwar derart, dass B(m) = A(m-d) ist, der an sich die nachfolgenden Teilschritte umfasst:

(a) einen Initialisierungsteilschritt, wobei der iterative Algorithmus mit dem Mittelwert $d_0(m)$ des Bewegungsvektors in einer kausalen Nachbarschaft S initialisiert wird:

$$d_0(m) = \frac{1}{\text{Card}(S)} \sum_{j \in S} d(m - j)$$

wobei die nachfolgenden Notierungen verwendet werden:

. m = Pixel, für das die Bewegung geschätzt werden soll;
. d(m) = der Bewegungsvektor;

. (b) = ein Aktualisierungsteilschritt zum Aktualisieren von $d_i$ entsprechend der nachfolgenden Beziehung:

$$d_{i+1} = d_i + u_i,$$

wobei $u_i$, bestimmt bei jeder Wiederholung i, ein Aktualisierungsvektor ist, gegeben durch:

$$u_i = -\frac{E(m)}{\|\nabla A\|^2 + \lambda} . \nabla A,$$

wobei $\nabla A$ der Gradient des Bildes an der Stelle $m-d_i$ ist, wobei $E(m) = B(m) - A(m-d_i)$ der Prädiktionsfehler bei der aktuellen Wiederholung ist, und wobei $\lambda$ ein Regelungsparameter ist;
(c) einen Entscheidungsschritt zum Durchführen eines Unterbrechungstestes und folglich zum Beenden der Prozedur, wenn $d_i$ nahe genug bei d liegt.

3. Codierungsverfahren nach Anspruch 2, wobei eine typische Nachbarschaft von vier Pixeln verwendet wird.

4. Codierungsverfahren nach einem der Ansprüche 2 und 3, wobei der genannte Unterbrechungstest auf die Schätzung des nachfolgenden Verhältnisses basiert:

$$R = \frac{\|u_i\|^2}{\|d_i\|^2}$$

wobei das Verhältnis größer sein soll als eine bestimmte Schwelle $\varepsilon$.

5. Codierungsverfahren nach Anspruch 4, wobei die genannte Schwelle $\varepsilon$ umgedreht wird zum Auswuchten der Vektorbestimmungsgenauigkeit und der rechnerischen Belastung.

6. Codierungsverfahren nach einem der Ansprüche 4 und 5, wobei der genannte Unterbrechungstest eine zusätzliche Bedingung aufweist, die an die maximale Anzahl Wiederholungen stellt wird.

7. Codierungsverfahren nach einem der Ansprüche 4 bis 6, wobei die Bestimmung des genannten Aktualisierungsvektors $u_i$ auf einen Rechenschritt mit dem nachfolgenden Minimierungsvorgang basiert: wenn bekannt ist, dass $B(m) = A(m-d_i) - \delta d^T . \nabla A$ wobei $\delta d^T . \nabla A$ das innere Produkt von $\nabla A$ und dem Vektor $\delta d = d - d_i$, zum Minimieren des quadratischen Fehlers J :

$$J = ((B(m) - A(m-d_i) + \delta d^T . \nabla A)^2 + \lambda \|\delta d\|^2$$

gegenüber $\delta d$, wobei der Term $\lambda \|\delta d\|^2$ ein Regelterm ist, geliefert im Hinblick auf ein Kompromiss zwischen der Glätte des resultierenden Bewegungsvektorfeldes für große Werte von $\lambda$, und der Genauigkeit der Bewegungsvektoren, für kleine Werte von $\lambda$, wobei das Minimum für $\partial J/\partial \delta d = 0$ erhalten wird und zu dem Aktualisierungsvektor führt:

$$\delta d = u_i = -\frac{E(m)}{\|\nabla A\|^2 + \lambda} \cdot \nabla A.$$

**8.** Codierungsverfahren nach Anspruch 7, wobei die Abtastrangordnung auf die nachfolgende Art und Weise durchgeführt wird: gerade Zeilen von links nach rechts, ungerade Zeilen von rechts nach links, wobei die Initialisierungsumgebung dann auch für die erste Zeile modifiziert wird, wobei sie auf das vorhergehende Pixel reduziert wird, und für die ungeraden Zeilen, wo sie umgekehrt wird um eine Kausalität zu bewahren.

**9.** Codierungsverfahren nach Anspruch 7, wobei der genannte Bewegungsschätzungsalgorithmus **dadurch** neuinitialisiert wird, dass eine Unterbrechungsbedingung mit gewisser Toleranz getestet wird, wobei der Prädiktionsfehler, bei Gebrauch des geschätzten Bewegungsvektors, für den genannten Test mit dem Prädiktionsfehler ohne Bewegungsschätzung plus einer Schwelle verglichen wird.

**10.** Codierungsverfahren nach Anspruch 2, wobei die Initialisierung des Bewegungsvektors mit einer linearen Kombination des Mittelwertes über die Umgebung S und den Bewegungsvektor, erhalten von dem Teilband mit derselben Orientierung, auf dem vorhergehenden Dekompositionspegel.

**11.** Codierungsverfahren nach Anspruch 1, wobei der genannte Pel-rekursive Bewegungsschätzungsalgorithmus, zur Verwendung der Korrelation, die es zwischen den Teilbändern gleichen Dekompositionspegels gibt, d.h. zum Schätzen eines bestimmten Dekompositionspegels $j \in \{1,2,.....,j_{max}\}$ und für jedes Pixel m des Bewegungsvektors $d_j(m)$ derart, dass $B_{j,s}(m) = A_{j,s}(m-d_j)$ for $s = \{0,..., 4\}$ ist, wobei die zwei Matrizes A und B zwei aufeinander folgende Teilbänder darstellen, selber die nachfolgenden Teilschritte aufweist:

(a) einen Initialisierungsteilschritt, wobei der iterative Algorithmus mit dem Mittelwert $d_j(m)$ des Bewegungsvektors in einer kausalen Umgebung S initialisiert wird:

$$d_{j,o}(m) = \frac{1}{\text{Card}(S)} \sum_{j \in S} d_j(m-k)$$

wobei die nachfolgenden Notierungen verwendet werden:

$k \in s$ (1 to 4);
m = Pixel, für das die Bewegung geschätzt werden soll
dj,o(m) = der Bewegungsvektor ;

(b) ein Aktualisierungsteilschritt zum Aktualisieren von dj, i+1 entsprechend der nachfolgenden Beziehung:

$$dj, i+1 = dj,i + uj,i,$$

wobei uj,i, bestimmt bei jeder Wiederholung i, ein Aktualisierungsvektor ist, gegeben durch:

$$u_{j,i} = \left( \sum_{s=0,1}^{3} (\nabla A_{j,s} \nabla A_{j,s}^T) + \lambda I \right)^{-1} \left( - \sum_{s=0,1}^{3} E_{j,s}(m) \nabla A_{j,s} \right)$$

wobei:

$$\nabla A_{j,s} = \begin{pmatrix} \dfrac{\partial A_{j,s}(m\text{-}d_{j,i})}{\partial m} \\ \dfrac{\partial A_{j,s}(m\text{-}d_{j,i})}{\partial n} \end{pmatrix}$$

der Gradient des Bildes an der Stelle m - dj,i und :

$$E_{j,s}\,(m) = B_{j,s}\,(m) - A_{j,s}\,(m - d_{j,i})$$

(c) ein Entscheidungsteilschritt zum Durchführen eines Unterbrechungstestes und folglich zum Beenden der Prozedur, wenn $d_{j,i}$ nahe genug bei $d_j$ ist.

**12.** Codierungsverfahren nach Anspruch 11, wobei eine typische Umgebung von vier Pixeln verwendet wird.

**13.** Codierungsverfahren nach einem der Ansprüche 11 und 12, wobei der genannte Unterbrechungstest auf die Schätzung des nachfolgenden Verhältnisses basiert:

$$R_{i,j} = \frac{\|u_{j,i}\|^2}{\|d_{j,i}\|^2}$$

wobei das genannte Verhältnis größer sein soll als die bestimmte Schwelle $\varepsilon$.

**14.** Codierungsverfahren nach Anspruch 13, wobei der genannte Unterbrechungstest eine zusätzliche Bedingung umfasst gestellt an eine maximale Anzahl Wiederholungen.

**15.** Codierungsverfahren nach einem der Ansprüche 13 und 14, wobei die Ermittlung des genannten Aktualisierungsvektors $u_i$ auf einen Rechenschritt mit dem nachfolgenden Minimierungsvorgang basiert: $B_{j,s} = A_{j,s}(m-d_j,i) - \delta d_j^T$. $\nabla A$ wobei $\delta d_j^T . \nabla A$ das innere Produkt von $\nabla A_{j,s}$ und dem Vektor $\delta d_j = d_j - d_{j,i}$ , zum Minimieren des quadratischen Fehlers ist:

$$\min_{\delta_{dj}} \left( \underbrace{\sum_{s=0,1}^{3} (B_{j,s}(m) - A_{j,s}(m - d_{j,i}) + \delta_j^T \nabla A_{j,s})^2 + \lambda \|\delta d_j\|^2}_{Ji} \right) \quad (27)$$

gegenüber $\delta dj$ , wobei der Term $\lambda\|\delta d_j\|^2$ ein Regelterm ist, vorgesehen im Hinblick auf ein Kompromiss zwischen der Glätte des resultierenden Bewegungsvektorfeldes für große Werte von $\lambda$, und der Genauigkeit der Bewegungsvektoren, für kleine Werte von $\lambda$, wobei das Minimum für $\partial J/\partial \delta d = 0$ erhalten wird.

**Revendications**

**1.** Procédé de codage vidéo basé sur une technique de codage en sous-bandes appliquée à une séquence de trames bidimensionnelles, ledit procédé comprenant une étape de décomposition en sous-bandes d'une trame courante (F2), une étape de prédiction du mouvement, effectuée sur une trame précédente ou de référence (F1), et une étape de codage, ledit procédé étant en outre **caractérisé en ce que** ladite étape de prédiction du mouvement est basée sur une décomposition redondante de la trame de référence, selon la procédure suivante :

(1) dans la sous-bande d'approximation de ladite décomposition, le mouvement est estimé au moyen d'une opération de recherche complète faisant intervenir ladite trame de référence et appliquée à chaque élément d'image (pixel) de la trame courante ;
(2) pour les autres sous-bandes, le mouvement est estimé au moyen d'un algorithme d'estimation de mouvement récursif sur les pixels (ou pel) utilisant pour la prédiction la sous-bande redondante de référence reconstruite à partir des sous-bandes sous-échantillonnées données par ladite décomposition en sous-bandes.

**2.** Procédé de codage selon la revendication 1, dans lequel ledit algorithme d'estimation du mouvement récursif sur les pixels, destiné à calculer le flux optique entre deux matrices A et B représentant deux sous-bandes successives, c'est-à-dire à estimer pour chaque pixel m son vecteur de mouvement d(m) de manière à ce que B(m) = A(m-d), comprend lui-même les sous-étapes suivantes :

(a) une sous-étape d'initialisation, l'algorithme itératif étant initialisé à la valeur moyenne $d_0(m)$ du vecteur de mouvement dans un voisinage causal S :

$$d_0(m) = \frac{1}{\text{Card}(S)} \sum_{j \in S} d(m - j)$$

les notations suivantes étant utilisées :

m = pixel pour lequel le mouvement doit être estimé ;
d(m) = son vecteur de mouvement ;

(b) une sous-étape de mise à jour pour mettre à jour $d_i$ selon la relation suivante :

$$d_{i+1} = d_i + u_i,$$

où $u_i$, déterminé à chaque itération i, est un vecteur de mise à jour donné par :

$$u_i = -\frac{E(m)}{\|\nabla A\|^2 + \lambda} . \nabla A$$

où $\nabla A$ est le gradient de l'image au point $m-d_i$, $E(m) = B(m)-A(m-d_i)$ est l'erreur de prédiction à l'itération courante, et $\lambda$ est un paramètre de régularisation ;
(c) une sous-étape de décision, pour effectuer un test d'arrêt et ainsi terminer la procédure si $d_i$ est suffisamment proche de d.

**3.** Procédé selon la revendication 2, dans lequel un voisinage typique de quatre pixels est utilisé.

**4.** Procédé de codage selon l'une quelconque des revendications 2 et 3, dans lequel ledit test d'arrêt est basé sur l'estimation du rapport suivant :

$$R = \frac{\|u_i\|^2}{\|d_i\|^2}$$

ledit rapport devant être supérieur à un seuil donné $\varepsilon$.

**5.** Procédé selon la revendication 4, dans lequel ledit seuil $\varepsilon$ est ajusté pour équilibrer la précision de détermination du vecteur et la charge de calcul.

**6.** Procédé de codage selon l'une quelconque des revendications 4 et 5, dans lequel ledit test d'arrêt comprend une condition supplémentaire imposée à un nombre maximum d'itérations.

**7.** Procédé de codage selon l'une quelconque des revendications 4 à 6, dans lequel la détermination dudit vecteur de mise à jour $u_i$ a pour base une étape de calcul comprenant l'opération de minimisation suivante : sachant que $B(m) = A(m-d_i) - \delta d^T.\nabla A$, où $\delta d^T.\nabla A$ est le produit vectoriel de $\nabla A$ par le vecteur $\delta d = d - d_i$, on minimise l'erreur quadratique J suivante :

$$J = (B(m) - A(m-d_i) + \delta d^T.\nabla A)^2 + \lambda\|\delta d\|^2$$

par rapport à $\delta d$, le terme $\lambda\|\delta d\|^2$ étant un terme de régularisation utilisé dans le but d'obtenir un compromis entre la régularité du champ de vecteurs de mouvement résultant, pour de grandes valeurs de λ, et la précision des vecteurs de mouvement, pour de faibles valeurs de λ, le minimum étant obtenu pour $\partial J / \partial \delta d = 0$ et conduisant au vecteur de mise à jour suivant :

$$\delta d = u_i = -\frac{E(m)}{\|\nabla A\|^2 + \lambda} \cdot \nabla A$$

**8.** Procédé de codage selon la revendication 7, dans lequel l'ordre de balayage est défini de la façon suivante : les lignes paires de la gauche vers la droite, les lignes impaires de la droite vers la gauche, le voisinage d'initialisation étant alors également modifié pour la première ligne, où il est réduit au pixel précédent, et pour les lignes impaires, où il est inversé pour conserver la causalité.

**9.** Procédé de codage selon la revendication 7, dans lequel ledit algorithme d'estimation du mouvement est réinitialisé en testant une condition d'arrêt avec une certaine tolérance, l'erreur de prédiction lors de l'utilisation du vecteur de mouvement estimé étant, pour ledit test, comparée à l'erreur de prédiction sans estimation de mouvement, plus un seuil.

**10.** Procédé de codage selon la revendication 2, dans lequel l'initialisation du vecteur de mouvement est effectuée avec une combinaison linéaire de la moyenne sur le voisinage S et du vecteur de mouvement obtenu à partir de la sous-bande ayant la même orientation, au niveau de décomposition précédent.

**11.** Procédé de codage selon la revendication 1, dans lequel ledit algorithme d'estimation du mouvement récursif sur les pixels, destiné à utiliser la corrélation qui existe entre les sous-bandes d'un même niveau de décomposition, c'est-à-dire à estimer, pour un niveau donné de décomposition $j \in \{1,2,..., jmax\}$ et pour chaque pixel m, son vecteur de mouvement $d_j(m)$ de manière à ce que $B_{j,s}(m) = A_{j,s}(m-d_j)$ pour s = {0, ..., 4}, les deux matrices A et B représentant deux sous-bandes successives, comprend lui-même les sous-étapes suivantes :

(a) une sous-étape d'initialisation, l'algorithme itératif étant initialisé à la valeur moyenne $d_j(m)$ du vecteur de mouvement dans un voisinage causal S :

$$d_{j,o}(m) = \frac{1}{\text{Card}(S)} \sum_{j \in S} d_j(m-k)$$

les notations suivantes étant utilisées :

$k \in s$ (1 à 4) ;
m = pixel pour lequel le mouvement doit être estimé ;
$d_{j,o}(m)$ = son vecteur de mouvement ;

(b) une sous-étape de mise à jour, pour mettre à jour $d_{j,i+1}$ selon la relation suivante :

$$d_{j,i+1} = d_{j,i} + u_{j,i},$$

où $u_{j,i}$, déterminé à chaque itération i, est un vecteur de mise à jour donné par :

$$u_{j,i} = (\sum_{s=0,1}^{3} (\nabla A_{j,s} \nabla A_{j,s}^T) + \lambda I)^{-1} (-\sum_{s=0,1}^{3} E_{j,s}(m) \nabla A_{j,s})$$

où

$$\nabla A_{j,s} = \begin{pmatrix} \dfrac{\partial A_{j,s}(\mathbf{m}\text{-}\mathbf{d}_{j,i})}{\partial \mathbf{m}} \\ \dfrac{\partial A_{j,s}(\mathbf{m}\text{-}\mathbf{d}_{j,i})}{\partial \mathbf{n}} \end{pmatrix}$$

est le gradient de l'image au point m - $d_{j,i}$, et

$$E_{j,s}(m) = B_{j,s}(m) - A_{j,s}(m\text{-}d_{j,i}) \; ;$$

(c) une sous-étape de décision, pour effectuer un test d'arrêt et par conséquent terminer la procédure, si $d_{j,i}$ est suffisamment proche de $d_j$.

**12.** Procédé de codage selon la revendication 11, dans lequel un voisinage typique de quatre pixels est utilisé.

**13.** Procédé de codage selon l'une quelconque des revendications 11 et 12, dans lequel ledit test d'arrêt est basé sur l'estimation du rapport suivant :

$$R_{i,j} = \frac{\|u_{j,i}\|^2}{\|d_{j,i}\|^2}$$

ledit rapport devant être supérieur à un seuil donné $\varepsilon$.

**14.** Procédé de codage selon la revendication 13, dans lequel ledit test d'arrêt comprend une condition supplémentaire imposée à un nombre maximum d'itérations.

**15.** Procédé de codage selon l'une quelconque des revendications 13 et 14, dans lequel la détermination dudit vecteur de mise à jour $u_i$ est basée sur une étape de calcul comprenant l'opération de minimisation suivante : sachant que $B_{j,s} = A_{j,s}(m\text{-}d_{j,i}) - \delta d_j^T.\nabla A_{j,s}$, où $\delta d^T.\nabla A$ est le produit vectoriel de $\nabla A_{j,s}$ et par le vecteur $\delta d_j = d_j - d_{j,i}$, on minimise l'erreur quadratique :

$$\min\nolimits_{\delta_{dj}} \left\{ \underbrace{\sum_{s=0,1}^{3} (B_{j,s}(m) - A_{j,s}(m - d_{j,i}) + \delta_j^T \nabla A_{j,s})^2 + \lambda \|\delta d_j\|^2}_{Ji} \right\} \quad (27)$$

par rapport à $\delta d_j$, le terme $\lambda\|\delta d_j\|^2$ étant un terme de régularisation utilisé dans le but d'obtenir un compromis entre la régularité du champ de vecteurs de mouvement résultant, pour les grandes valeurs de $\lambda$, et la précision des vecteurs de mouvement pour les faibles valeurs de $\lambda$, et le minimum étant obtenu pour $\partial J_j/\partial \delta d_j = 0$.

FIG.1

FIG.2

FIG.3

FIG.4

FIG. 5

FIG.6

FIG.7

FIG.8

FIG.9

1 LEVEL $f[n]$ → L(z) → $\downarrow 2$ → $L_1[n]$

H(z) → $\downarrow 2$ → $H_1[n]$

FIG.10

2 LEVELS $f[n]$ → L(z) → L(z²) → $\downarrow 4$ → $L_2[n]$

H(z) → H(z²) → $\downarrow 4$ → $H_2[n]$

FIG.11

3 LEVELS $f[n]$ → L(z) → L(z²) → L(z⁴) → $\downarrow 8$ → $L_3[n]$

H(z) → H(z²) → H(z⁴) → $\downarrow 8$ → $H_3[n]$

FIG.12

FIG.13

FIG.14

EP 1 405 521 B1

```
a a a a        b b b b        c c c c        d d d d
a a a a        b b b b        c c c c        d d d d
a a a a        b b b b        c c c c        d d d d
a a a a        b b b b        c c c c        d d d d
  (0,0)          (0,1)          (1,0)          (1,1)
```

Interleaving

```
a c a c a c a c
b d b d b d b d
a c a c a c a c
b d b d b d b d
a c a c a c a c
b d b d b d b d
a c a c a c a c
b d b d b d b d
```

(0,0) : (Xparity, Yparity)
  0 : even samples
  1 : odd samples

## FIG.15

FIG.16

$2 \cdot (2^{jmax}) + 1$

Position$(f(n+1), f(m-1)$

$2 \cdot (2^{jmax}) + 1$

Position$(f \cdot n, f \cdot m)$

FIG.19

FIG.17

FIG.18